# EUROPÄISCHE PATENTSCHRIFT

(11) **EP 2 073 315 B1**
(45) Veröffentlichungstag und Bekanntmachung des Hinweises auf die Patenterteilung: **04.03.2015**
(21) Anmeldenummer: 08020816.8
(22) Anmeldetag: 01.12.2008
(51) Int. Cl.: H01R 9/26, H01R 13/66, H04B 5/02, H04B 5/00

(54) **Modulares Datenübertragungssystem mit separater Energieversorgung für jedes angeschaltete Module**
Modular data transfer system with separate energy supply for each connected module
Système de transmission de données modulaire doté d'une alimentation en énergie distincte pour chaque module couplé

(30) Priorität: 18.12.2007 DE 102007061610
(43) Veröffentlichungstag der Anmeldung: 24.06.2009
(73) Patentinhaber: Phoenix Contact GmbH & Co. KG, 32825 Blomberg (DE)
(72) Erfinder: Kuschke, Detlev, 32816 Schieder-Schwalenberg (DE); Derksen, Johann, 33034 Brakel (DE); Hoffmann, Michael, 33813 Oerlingshausen (DE); Grewe, Stephan, 32657 Lemgo (DE); Weiß, Dominik, 31855 Aerzen (DE)
(74) Vertreter: Kampfenkel, Klaus

(56) Entgegenhaltungen:
- EP-A1- 1 447 829
- EP-A1- 1 764 873
- EP-A2- 1 519 393
- WO-A1-2006/027336
- DE-A1- 19 917 597
- DE-U1- 29 624 219

## Beschreibung

Die Erfindung betrifft ein modulares Datenübertragungssystem mit mehreren aneinander anreihbaren Modulen oder Busteilnehmern gemäß dem Oberbegriff des Anspruchs 1.

Ein derartiges Bussystem ist beispielsweise aus der DE 296 24 219 U1 bekannt. Das Bussystem enthält mehrere, aneinander angereihte Busteilnehmern, die auf einer Tragschiene aufgerastet sind. Die Busteilnehmer verfügen über Kopplungseinrichtungen, die eine kontaktlose Datenübertragung zwischen den Busteilnehmern ermöglichen. Jeder Busteilnehmer verfügt über elektrische Anschlusskontakte zum Anschalten an eine Energieversorgungseinrichtung.

Aus der DE 196 40 367 A1 ist ein modular aufgebautes Steuersystem bekannt, bei dem die Energieversorgung der Module und die Übertragung von Informationen zwischen den einzelnen Modulen auf elektromagnetischem Wege erfolgt. Bei Ausfall oder beim Entfernen eines Moduls können die auf dieses Modul folgenden Module nicht mehr mit Energie versorgt und somit auch nicht mehr in einen definierten Zustand gefahren werden.

Aus der EP 1 519 393 A2 ist eine elektromagnetische Steckverbindung bekannt, die zur Datenübertragung insbesondere im Ethernet dient.

Eine Vorrichtung zur drahtlosen Energie- und/oder Datenübertragung ist ferner aus der DE 4 344 071 A1 bekannt.

Aus der DE 103 45 048 A1 ist eine Steckverbindung zum Anschluss an eine Datenübertragungsstrecke bekannt, bei der Daten induktiv übertragen werden können.

Aus WO 2006/027336 A1 ist ein Schaltgerät mit steckbaren Anschlüssen bekannt, bei dem zu- und abführende Stromleitungen an je ein Steckanschlussmodul anklemmbar sind, die mit dem Schaltgerät durch Anstecken verbindbar sind. Das Schaltgerät beherbergt eine Kontaktbrücke, die bei Überstrom geöffnet werden kann.

Der Erfindung liegt die Aufgabe zugrunde, ein modulares Datenübertragungssystem zu schaffen, welches eine zuverlässige Energieversorgung aller Module ermöglicht und eine im wesentlichen fehlerfreie Datenübertragung zwischen den Modulen gewährleistet.

Ein weiterer Gesichtspunkt der Erfindung ist darin zu sehen, ein modulares Datenübertragungssystem bereitzustellen, welches eine Hochgeschwindigkeitsdatenübertragung, beispielsweise mit einer Rate von 200 Mbit/s, unterstützt.

Ein Kerngedanke der Erfindung ist darin zu sehen, die Busteilnehmer eines modularen Datenübertragungssystems jeweils mit einem Bussockel zu koppeln, der den entsprechenden Busteilnehmer hinsichtlich der benachbarten Busteilnehmer positioniert. Auf diese Weise ist eine präzise Positionierung der Module zueinander gewährleistet, wodurch eine sichere kontaktlose Datenübertragung erfolgen kann. Die Bussockel haben ferner die Aufgabe, elektrische Versorgungsenergie von oder zu den jeweiligen Busteilnehmern zu übertragen, so dass selbst bei Ausfall eines Busteilnehmers die übrigen Busteilnehmer noch mit Energie versorgt und somit in einen definierten Sicherheitszustand, wie z. B. Notaus, gefahren werden können. Angemerkt sei an dieser Stelle, dass es sich bei dem modularen Datenübertragungssystem um ein sogenanntes Lokalbussystem handeln kann, welches insbesondere in Schaltschränken installiert wird. Das modulare Datenübertragungssystem wiederum kann mit einem Feldbus verbunden sein.

Das obengenannte technische Problem wird durch ein modulares Datenübertragungssystem gelöst, welches eine Tragschiene, einen ersten Busteilnehmer, der einen ersten Sender zum drahtlosen Übertragen von Daten und eine elektrische Verbindungseinrichtung aufweist, und einen zweiten Busteilnehmer, der einen ersten Empfänger zum drahtlosen Empfangen von Daten und eine elektrische Verbindungseinrichtung aufweist, umfasst. Der erste und der zweite Busteilnehmer sind aneinander anreihbar an der Tragschiene lösbar befestigt. In vorteilhafter Weise sind die Busteilnehmer als Klemmmodule auf der Tragschiene aufgerastet.

Der erste und zweite Busteilnehmer sind jeweils mit einem Bussockel lösbar verbunden. Jeder Bussockel weist eine elektrische Gegenverbindungseinrichtung, die im verbundenen Zustand mit der elektrischen Verbindungseinrichtung des jeweiligen Busteilnehmers zur Übertragung von Versorgungsenergie gekoppelt ist, und eine Positionierungseinrichtung zum Positionieren des jeweiligen Busteilnehmers auf. Angemerkt sei, dass unter den Ausdrücken "elektrische Verbindungseinrichtung" und "elektrische Gegenverbindungseinrichtung" Verbindungseinrichtungen zu verstehen sind, die derart ausgebildet sind, dass sie kontaktbildende oder kontaktlose, zum Beispiel induktive oder kapazitive, Verbindungen bilden, um Versorgungsenergie übertragen zu können.

Um das Datenübertragungssystem beispielsweise mit einem Feldbus verbinden zu können, können der erste und/oder zweite Busteilnehmer Schnittstellen zum Anschalten des modularen Datenübertragungssystems an den Feldbus aufweisen.

Gemäß einer vorteilhaften Weiterbildung enthält das modulare Datenübertragungssystem wenigstens einen dritten Busteilnehmer, der einen ersten Sender und einen ersten Empfänger zum kontaktlosen Übertragen bzw. kontaktlosen Empfangen von Daten sowie eine elektrische Verbindungseinrichtung aufweist. Der wenigstens eine dritte Busteilnehmer ist zwischen dem ersten und zweiten Busteilnehmer angeordnet und lösbar mit der Tragschiene befestigt. Zudem ist der wenigstens eine Busteilnehmer mit einem Bussockel lösbar verbunden, welcher eine elektrische Gegenverbinduhgseinrichtung die im verbundenen Zustand mit der elektrischen Verbindungseinrichtung des jeweiligen Busteilnehmers zur Übertragung von Versorgungsenergie gekoppelt ist, sowie eine Positionierungseinrichtung zum Positionieren des dritten Busteilnehmers bezüglich der anderen Busteilnehmer aufweist.

Je nach Ausbildung der Positionierungseinrichtung des jeweiligen Bussockels kann jeder Busteilnehmer eine dazu komplementäre Positionierungseinrichtung aufweisen.

Gemäß einer vorteilhaften Ausbildungsform bildet die elektrische Verbindungseinrichtung jedes Busteilnehmers mit der elektrischen Gegenverbindungseinrichtung des jeweiligen Bussockels eine kontaktlose oder kontaktbildende Steckverbindung zur Übertragung der Versorgungsenergie.

Bei einer kontaktlosen Energieversorgung der Busteilnehmer weist die elektrische Gegenverbindungseinrichtung jedes Bussockels einen Teilübertrager mit einer Sendespule und jeder Busteilnehmer einen Teilübertrager mit einer Empfangsspule auf. Die Energieversorgung über einen magnetischen Weg hat den Vorteil, dass die Busteilnehmer galvanisch von einem Rückwandbus getrennt werden können. Auf diese Weise kann auf eine galvanische Trennung der Logikschaltung zu peripheren Baukomponenten in den Modulen bzw. Busteilnehmern verzichtet werden.

Gemäß einer besonderen Ausführungsform übernimmt die Gegenverbindungseinrichtung des Bussockels die Funktion der Positionierungseinrichtung. Hierzu weist der Teilübertrager jedes Bussockels beispielsweise einen E-förmigen ferromagnetischen Kern auf, wobei wenigstens ein Schenkel des E-förmigen Kerns die Positionierungseinrichtung des jeweiligen Bussockels bildet, welche mit einer komplementären Positionierungseinrichtung des jeweiligen Busteilnehmers zusammenwirkt. Der Teilübertrager jedes Busteilnehmers enthält einen C-förmigen ferromagnetischen Kern.

Um eine kompakte und platzsparende Bauweise zu erzielen, ist der Bussockel lösbar an der Tragschiene befestigt. In vorteilhafter Weise sind die Bussockel innerhalb der Tragschiene angeordnet.

Um eine bidirektionale Datenübertragung zwischen den Busteilnehmern zu ermöglichen, weist der erste Busteilnehmer einen ersten Empfänger, der wenigstens eine dritte Busteilnehmer einen Sender sowie einen zweiten Empfänger und der zweite Busteilnehmer einen ersten Sender auf.

Um neben einer bidirektionalen Datenübertragung auch Taktinformationen zur Synchronisation der Busteilnehmer kontaktlos übertragen zu können, weist der erste Busteilnehmer einen zweiten Sender, der wenigstens eine dritte Busteilnehmer einen dritten Sender und einen dritten Empfänger und der zweite Busteilnehmer einen zweiten Empfänger auf.

Um eine zuverlässige Energieversorgung der Busteilnehmer sicherstellen zu können, ist wenigstens ein Bussockel mit einer externen Energieversorgungseinrichtung verbunden.

Sind nicht alle Bussockel mit einer externen Energieversorgungseinrichtung verbunden, werden zumindest einige aneinander gereihter Bussockel elektrisch miteinander verbunden, so dass Versorgungsenergie auf die Busteilnehmer, die nicht mit einem Bussockel verbunden sind, welcher an einer Energieversorgungseinrichtung angeschlossen sind, verteilt werden kann.

Alternativ kann wenigstens ein Busteilnehmer eine Energieversorgungseinrichtung aufweisen. Die Busteilnehmer, welche keine eigene Energieversorgungseinrichtung aufweisen, erhalten die Versorgungsenergie über die jeweiligen Bussockel, die hierzu elektrisch miteinander verbunden sind.

Um eine Hochgeschwindigkeitsübertragung zwischen den Busteilnehmern zu ermöglichen, ist jeder Sender und/oder Empfänger jedes Busteilnehmers zum Übertragen bzw. Empfangen von Differenzsignalen ausgebildet.

Zweckmäßigerweise weist jeder Sender jedes Busteilnehmers einen Differenzsignaltreiber zum Ansteuern einer induktiven oder kapazitiven Einrichtung auf. Darüber hinaus ist jeder Empfänger jedes Busteilnehmers als Differenzsignalempfänger ausgebildet, der mit einer induktiven oder kapazitiven Einrichtung verbunden ist.

Gemäß einer zweckmäßigen Ausgestaltungen können der erste, der zweite und der wenigstens eine dritte Busteilnehmer gleich aufgebaut sein.

Die Erfindung wird nachfolgend anhand eines Ausführungsbeispiels in Verbindung mit den beiliegenden Zeichnungen näher erläutert. Dabei zeigen:
- Fig. 1: eine perspektivische Ansicht von mehreren, auf einer Trageschiene aneinander angereihten Busteilnehmern,
- Fig. 2: eine schematische Draufsicht auf eine Anzahl von mit jeweils einem Bussockel verbundenen Busteilnehmern, welche eine induktive Datenübertragung ermöglichen,
- Fig. 3: eine Draufsicht auf eine Anzahl von mit jeweils einem Bussockel verbundenen Busteilnenmern, die eine kapazitive Datenübertragung ermöglichen, und
- Fig. 4: eine schematische Darstellung einer beispielhaften induktiven Steckverbindung zwischen einem Bussockel und einem Busteilnehmer.

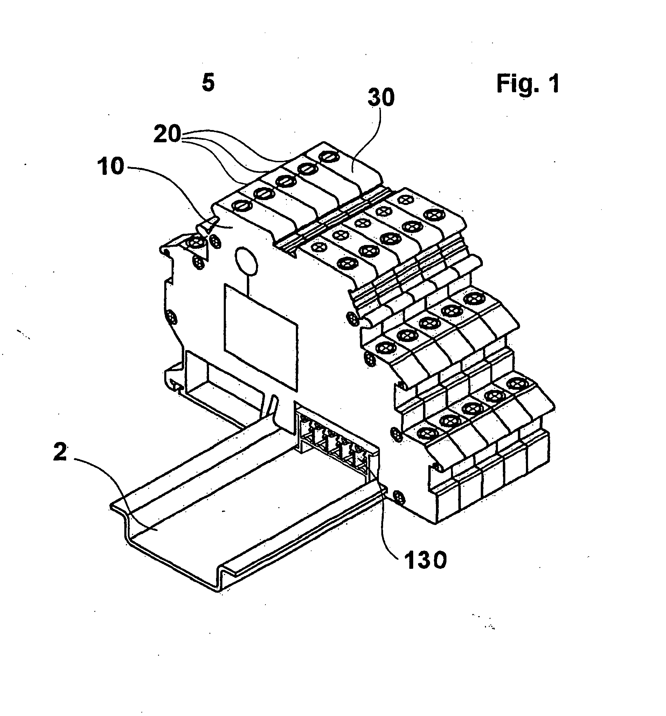

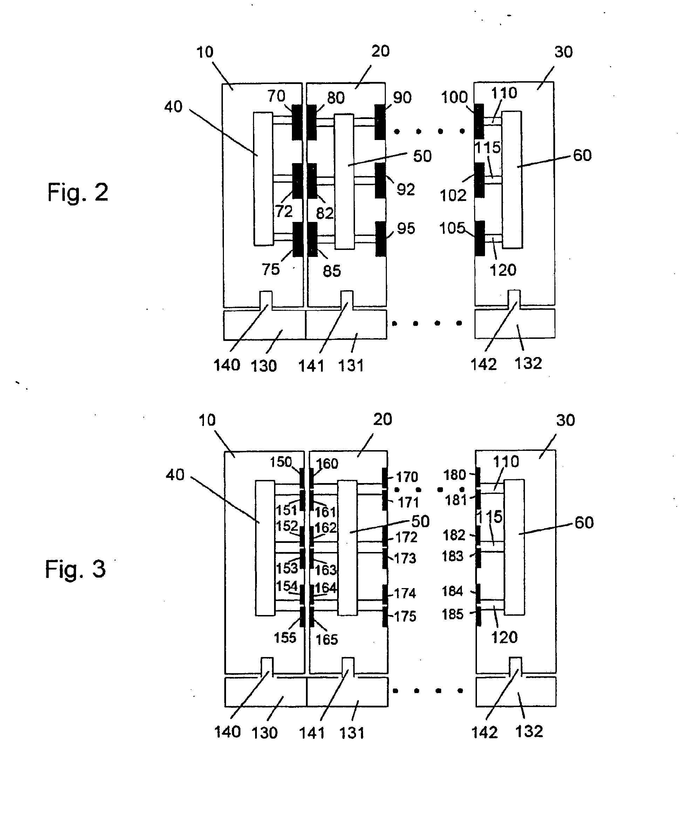

Fig. 1 zeigt ein beispielhaftes modulares Datenübertragungssystem 5 in Form eines Lokalbussystems, welches in einem Schaltschrank (nicht dargestellt) installiert sein kann. Das modulare Datenübertragungssystem 5 weist eine Tragschiene 2 auf, in der mehrere Bussockel angeordnet sind. Lediglich der Bussockel 130 ist teilweise sichtbar. Weiterhin sind auf der Tragschiene 2 mehrere Busteilnehmer, Seite an Seite, aneinander angereiht auf der Tragschiene 2 aufgerastet. Im vorliegenden Beispiel sind fünf Busteilnehmer aufgerastet. Im aufgerasteten Zustand ist jeder Busteilnehmer mit einem Bussockel mechanisch und elektromagnetisch gekoppelt. Wie nachfolgend noch näher ausgeführt wird, dienen die Bussockel dazu, den jeweiligen Busteilnehmer zu positionieren und mit Versorgungsenergie zu speisen. Wie nachfolgend noch erläutert wird, gibt es Ausführungsbeispiele, bei denen nicht jedem Busteilnehmer Energie über die Bussockel zugeführt wird. Im vorliegenden Beispiel bildet der erste, links außen liegende Busteilnehmer 10 ein Randmodul und der rechts außen liegende Busteilnehmer 30 ein weiteres Randmodul. Die dazwischen liegenden Busteilnehmer 20 werden als Zwischenmodule bezeichnet. Die beiden Randmodule 10 und 30 können Anschlusselemente oder Schnittstellen aufweisen, über die sie mit einem Feldbus, beispielsweise dem Interbus S nach DIN 19258 angeschlossen werden können. Wie nachfolgend anhand der Fig. 2 und 3 noch näher ausgeführt wird, erfolgt die Datenübertragung zwischen den Busteilnehmern 10, 20 und 30 kontaktlos. Angemerkt sei, dass die einzelnen Busteilnehmer innerhalb des modularen Datenübertragungssystems 5 unterschiedliche Funktionen ausführen können.

In Fig. 2 sind die beiden Randmodule 10 und 30 und der einfachen Darstellung wegen nur einer der Zwischenmodule 20 schematisch dargestellt. Wie Fig. 2 weiter zeigt, ist der Busteilnehmer 10 mit einem Bussockel 130, der Busteilnehmer 20 mit einem Bussockel 131 und der Busteilnehmer 30 mit einem Bussockel 132 verbunden. Die Busteilnehmer 10, 20 und 30 liegen Seite an Seite, wobei zwischen benachbarten Busteilnehmern ein Spalt vorhanden sein kann. Auch zwischen einem Busteilnehmer und einem zugeordneten Bussockel kann ein Spalt existieren.

Der als Randmodul fungierende Busteilnehmer 10 weist eine Schaltungseinrichtung 40 auf, die zum Senden und Empfangen von Differenzsignalen ausgebildet ist. Die Schaltungseinrichtung 40 weist eine Sendestufe auf, welche eine Sendespule 70 mit einem Differenzsignal ansteuern kann. Die Sendestufe kann auch als Differenzsignaltreiber bezeichnet werden. Um einen bidirektionalen Datenaustausch zu ermöglichen, weist die Schaltungseinrichtung 40 eine Empfangsstufe auf, welche die von einer Empfangsspule 72 kommenden Differenzsignale empfangen und auswerten kann. Um Taktsignale übertragen zu können, kann die Schaltungseinrichtung 40 eine weitere Sendestufe aufweisen, die eine zweite Sendespule 75 durch ein Differenzsignal ansteuern kann. Die Sendespulen 70 und 75 sowie die Empfangsspule 72 sind in der Nähe oder an der rechten Seitenwand des Busteilnehmers 10 angeordnet. Differenzsignale haben den Vorteil, dass die Ansteuerung der Sendespulen 70 und 75 sowie die Auswertung der von der Empfangsspule 72 kommenden Differenzsignale einfacher gehalten werden kann. Im Übrigen ermöglichen Differenzsignale eine hohe Datenübertragungsrate.

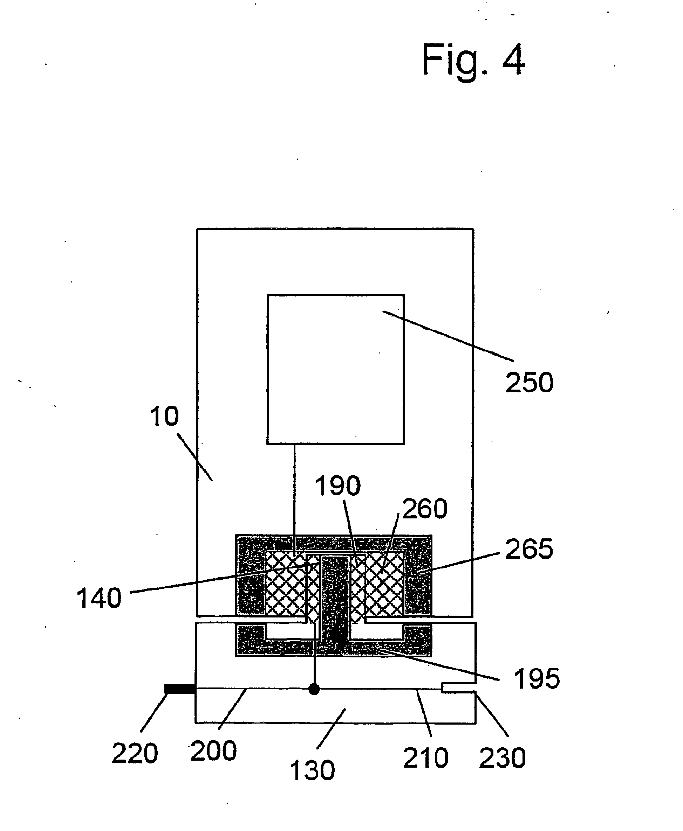

Der Busteilnehmer 10 verfügt über einen Teilübertrager, der mit einem Teilübertrager des Bussockels 130 zusammenwirken kann. Die beiden Teilübertrager bilden im zusammengefügten Zustand eine elektromagnetische Steckverbindung, welche weiter unten in Verbindung mit Fig. 4 noch näher erläutert wird. Der Bussockel 130 weist ferner beispielsweise einen Positionierungsstift 140 auf, der in eine entsprechende Aussparung im Busteilnehmer 10 eingreift.

Das dargestellte Zwischenmodul 20 weist eine Schaltungseinrichtung 50 auf, die mit einer Empfangsspule 80, einer Sendespule 82 und einer weiteren Empfangsspule 85 verbunden ist. Die Empfangsspulen 80 und 85 sowie die Sendespule 82 sind in Nähe oder an der linken Seitenwand des Busteilnehmers 20 angeordnet, und zwar fluchtend zu den Sendespulen 70 und 75 bzw. zur Empfangsspule 72 des Busteilnehmers 10. Auf diese Weise können Taktsignale und, in bidirektionaler Richtung, Datensignale kontaktlos, im vorliegenden Beispiel mittels induktiver Kopplung, zwischen den Busteilnehmern 10 und 20 übertragen werden. Die Schaltungseinrichtung 50 weist demzufolge eine Sendestufe auf, welche die Sendespule 82 mit Differenzsignalen ansteuert. Darüber hinaus weist die Schaltungseinrichtung 50 zwei Empfangsteile auf, die die von den Empfangsspulen 80 und 85 kommenden Datensignale bzw. Taktsignale empfangen und entsprechend auswerten kann. Die Schaltungseinrichtung 50 ist ferner mit einer Sendespule 90, einer Empfangsspule 92 und einer weiteren Sendespule 95 verbunden, die in der Nähe oder an der gegenüber liegenden Seitenwand des Busteilnehmers 20 angeordnet sind. Die Schaltungseinrichtung 50 verfügt über zwei weitere Sendestufen, die die Sendespulen 90 und 95 mit Differenzsignalen ansteuern. Eine Empfangsstufe ist vorgesehen, um die über die Empfangsspule 92 zugeführten Differenzsignale empfangen und auswerten zu können.

Wie der Busteilnehmer 10 verfügt auch der Busteilnehmer 20 über einen Teilübertrager, der mit einem Teilübertrager des Bussockels 131 zusammenwirken kann. Die beiden Teilübertrager bilden im zusammengefügten Zustand eine elektromagnetische Steckverbindung, welche weiter unten in Verbindung mit Fig. 4 noch näher erläutert wird. Der Bussockel 131 weist ferner beispielsweise einen Positionierungsstift 141 auf, der in eine entsprechende Aussparung im Busteilnehmer 20 eingreift. Angemerkt sei, dass die übrigen Zwischenmodule 20 ähnlich dem zuvor beschriebenen Aufbau realisiert sein können.

Der ebenfalls als Randmodul fungierende Busteilnehmer 30 weist wiederum eine Schaltungseinrichtung 60 auf, die mit einer Empfangsspule 100, einer Sendespule 102 und einer weiteren Empfangsspule 105 verbunden ist. Die Empfangsspulen 100 und 105 sowie die Sendespule 102 sind in der Nähe oder an der linken Seitenwand des Busteilnehmers 30 angeordnet, und zwar fluchtend zu den Sendespulen 90 und 95 bzw. der Empfangsspule 92 eines benachbarten Busteilnehmers 20. Die Schaltungseinrichtung 60 weist eine Empfangsstufe auf, welche die von der Empfangsspule 100 kommenden Differenzsignale empfangen und auswerten kann. Eine weitere Empfangsstufe ist dazu ausgebildet, die über die Empfangsspule 105 kommenden Differenzsignale, welche Taktinformationen enthalten, zu Synchronisationszwecken auszuwerten. Weiterhin weist die Schaltungseinrichtung 60 eine Sendestufe auf, die die Sendespule 102 mit Differenzsignalen ansteuern kann. Die zur Übertragung von Differenzsignalen jeweils notwendigen Leitungspaare sind mit Bezugszeichen 110, 115 und 120 gekennzeichnet.

Wie der Busteilnehmer 10 verfügt auch der Busteilnehmer 30 über einen Teilübertrager, der mit einem Teilübertrager des Bussockels 132 zusammenwirken kann. Die beiden Teilübertrager bilden im zusammengefügten Zustand eine elektromagnetische Steckverbindung, welche weiter unten in Verbindung mit Fig. 4 noch näher erläutert wird. Der Bussockel 132 weist ferner beispielsweise einen Positionierungsstift 142 auf, der in eine entsprechende Aussparung im Busteilnehmer 30 eingreift.

Die Positionierungseinrichtungen 140, 141 und 142 der Bussockel 130, 131 bzw. 132 und die der Busteilnehmer 10, 20 und 30 können derart dimensioniert sein, dass zwischen jedem gekoppelten Busteilnehmer und Bussockel ein Luftspalt vorhanden ist.

Bei einem Ausführungsbeispiel enthält nur der in Fig. 2 dargestellte Busteilnehmer 10 eine interne Energieversorgungsquelle 250, die in Fig. 4 gezeigt ist. Die Energieversorgungsquelle 250 speist in diesem Fall nicht nur den Busteilnehmer 10, sondern auch die übrigen Busteilnehmer 20 und 30 mit Energie. Demzufolge weisen die Bussockel 130, 131 und 132 elektrische Kontaktelemente auf, über die sie elektrisch miteinander verbunden werden können, um die von der Energieversorgungsquelle gelieferte Energie auf die übrigen Busteilnehmer 20 und 30 verteilen zu können. Entsprechende Kontakte 220 und 230 sind in Fig. 4 dargestellt. Auf diese Weise fungieren die neben einander angeordneten Bussockel als separate Stromschiene.

Denkbar ist auch, dass beispielsweise die beiden Randmodule 10 und 30 jeweils eine eigene Energieversorgungsquelle aufweisen, die jeweils einen oder mehrere benachbarte Busteilnehmer mit Energie versorgen. Beispielsweise versorgt die Energieversorgungsquelle 250 des Busteilnehmers 10 den unmittelbar angrenzenden Busteilnehmer 20 mit Energie, während die Energieversorgungsquelle des Busteilnehmers 30 die übrigen Busteilnehmer 20 mit Energie versorgt. Auf diese Weise werden Gruppen von Busteilnehmern gebildet, die unabhängig voneinander mit Energie versorgt werden. In dem beschriebenen Fall können zum Einen der dem Busteilnehmer 10 zugeordnete Bussockel 130 und der dem unmittelbar angrenzenden Busteilnehmer 20 zugeordnete Bussockel 131 elektrisch miteinander verbunden sein. Zum Anderen können die Bussockel der Busteilnehmer 20, die von der Energieversorgungseinrichtung des Busteilnehmers 30 mit Energie versorgt werden, elektrisch miteinander verbunden sein. Die beiden benachbarten, zu unterschiedlichen Gruppen gehörenden Bussockel müssen nicht elektrisch miteinander verbunden sein. Anstatt einen oder mehrere Busteilnehmer mit interner Energieversorgungsquelle einzusetzen, kann auch eine externe Energieversorgungsquelle direkt mit einem oder mehreren Bussockel verbunden werden. Auch in diesem Fall können die Bussockel elektrisch miteinander verbunden sein, um die Versorgungsenergie auf die Busteilnehmer 10, 20 und 30 zu verteilen.

Die in Fig. 3 gezeigte beispielhafte Ausführungsform unterscheidet sich von der in Fig. 2 dargestellten lediglich darin, dass die Busteilnehmer 10, 20 und 30 zur kontaktlosen Übertragung von Daten nicht induktiv, sondern kapazitiv gekoppelt sind. Zu diesem Zweck werden Kondensatorplatten anstelle von Spulen verwendet. Jeder Busteilnehmer kann wiederum mit einem Bussockel 130, 131, 132 mechanisch über Positionierungsstifte 140, 141 bzw. 142 und elektromagnetisch gekoppelt sein.

Der als Randmodul fungierende Busteilnehmer 10 weist eine Schaltungseinrichtung 40 auf, die zum Senden und Empfangen von Differenzsignalen ausgebildet ist. Die Schaltungseinrichtung 40 weist eine Sendestufe auf, welche zwei Kondensatorplatten 150, 151 mit einem Differenzsignal ansteuern kann. Die beiden Kondensatorplatten 150 und 151 können auch als kapazitive Sendeeinrichtung bezeichnet werden. Um einen bidirektionalen Datenaustausch zu ermöglichen, weist die Schaltungseinrichtung 40 eine Empfangsstufe auf, welche die von zwei Kondensatorplatten 152, 153 kommenden Differenzsignale empfangen und auswerten kann. Die Kondensatorplatten 152 und 153 können auch als kapazitive Empfangseinrichtung bezeichnet werden. Um Taktsignale übertragen zu können, kann die Schaltungseinrichtung 40 eine weitere Sendestufe aufweisen, die zwei Kondensatorplatten 154, 155 mit einem Differenzsignal ansteuern kann. Die Kondenstorplatten 150 bis 155 sind in der Nähe oder an der rechten Seitenwand des Busteilnehmers 10 angeordnet.

Das dargestellte Zwischenmodul 20 weist eine Schaltungseinrichtung 50 auf. Die Schaltungseinrichtung 50 enthält eine Empfangsstufe, die mit zwei als kapazitive Empfangseinrichtung fungierenden Kondensatorplatten 160, 161 verbunden ist, eine Sendestufe, die mit zwei als kapazitive Sendeeinrichtung fungierenden Kondensatorplatten 162, 163 verbunden ist, sowie eine weitere Empfangsstufe, die mit zwei weiteren als kapazitive Empfangseinrichtung fungierenden Kondensatorplatten 164, 165 verbunden ist. Die Kondensatorplatten 160 bis 165 sind in Nähe oder an der linken Seitenwand des Busteilnehmers 20 angeordnet, und zwar fluchtend und paarweise zugeordnet zu den Kondensatporplatten 150 bis 155 des Busteilnehmers 10. Mit anderen Worten bilden beispielsweise die Kondensatorplatten 150 und 160, die Kondensatorplatten 151 und 161, die Kondensatorplatten 152 und 162, die Kondensatorplatten 153 und 163, die Kondensatorplatten 154 und 164 und die Kondensatorplatten 155 und 165 jeweils einen Kondensator.

Die Schaltungseinrichtung 50 weist des weiteren eine Sendestufe auf, welche zwei als kapazitive Sendeeinrichtung fungierende Kondensatorplatten 170, 171 mit Differenzsignalen ansteuert. Darüber hinaus weist die Schaltungseinrichtung 50 eine weitere Empfangsstufe auf, mit zwei als kapazitive Empfangseinrichtung fungierenden Kondensatorplatten 172, 173 verbunden ist. Eine weitere Empfangseinrichtung ist mit zwei als weitere kapazitive Empfangseinrichtung wirkenden Kondensatorplatten 174, 175 verbunden. Die Kondensatorplatten 170 bis 175 sind in der Nähe oder an der gegenüber liegenden Seitenwand des Busteilnehmers 20 angeordnet. Auf diese Weise können Taktsignale und, in bidirektionaler Richtung, Datensignale als Differenzsignale kontaktlos, im vorliegenden Beispiel mittels kapazitiver Kopplung, zwischen den Busteilnehmern 10, 20 und 30 übertragen werden.

Der ebenfalls als Randmodul fungierende Busteilnehmer 30 weist wiederum eine Schaltungseinrichtung 60 auf. Die Schaltungseinrichtung 60 enthält eine Empfangsstufe, die, mit zwei als kapazitive Empfangseinrichtung fungierenden Kondensatorplatten 180 und 181 verbunden ist, eine Sendestufe, die mit zwei als kapazitive Sendeeinrichtung wirkenden Kondensatorplatten 182 und 183 verbunden ist, sowie eine weitere Empfangsstufe, die mit zwei als weitere Empfangseinrichtung fungierenden Kondensatorplatten 184 und 185 verbunden ist. Die Kondensatorplatten 180 bis 185 sind in der Nähe oder an der linken Seitenwand des Busteilnehmers 30 angeordnet, und zwar fluchtend und paarweise zugeordnet zu den jeweiligen Kondensatorplatten 170 bis 175 eines benachbarten Busteilnehmers 20. Die erste Empfangsstufe ist derart ausgebildet, dass sie die von den Kondensatorplatten 180, 182 kommenden Differenzsignale empfangen und auswerten kann. Die weitere Empfangsstufe ist dazu ausgebildet, die über die Kondensatorplatten 184 und 185 kommenden Differenzsignale, welche Taktinformationen enthalten, zu Synchronisationszwecken auszuwerten. Die Sendestufe ist als Differenzsignaltreiber ausgebildet, um Differenzsignale an die Kondensatorplatten 180 und 181 anzulegen. Die zur Übertragung von Differenzsignalen jeweils notwendigen Leitungspaare sind wiederum mit Bezugszeichen 110, 115 und 120 gekennzeichnet. Die Busteilnehmer 10, 20 und 30 können wiederum in der hinsichtlich der Fig. 2 beschriebenen Weise mit Energie versorgt werden.

Mit den in Fig. 2 und 3 dargestellten Datenübertragungssystemen können vom Busteilnehmer 10 übertragene Differenzsignale kontaktlos, d. h. mittels induktiver bzw. kapazitiver Kopplung, über die Busteilnehmer 20 zum Busteilnehmer 30 übertragen werden. In ähnlicher Weise können vom Busteilnehmer 30 übertragene Daten als Differenzsignale kontaktlos mittels kapazitiver bzw. induktiver Kopplung über die Busteilnehmer 20 zum Busteilnehmer 10 übertragen werden. Vom Busteilnehmer 10 übertragene Taktsignale werden ebenfalls als Differenzsignale kontaktlos mittels induktiver bzw. kapazitiver Kopplung zum Busteilnehmer 20 und zum Busteilnehmer 30 übertragen.

Fig. 4 zeigt in vergrößertem Maßstab den Bussockel 130 und den unteren Abschnitt des Busteilnehmers 10, welcher mechanisch und elektromagnetisch mit dem Bussockel 130 gekoppelt ist. Angemerkt sei an dieser Stelle bereits, dass die Positioniereinrichtung 140 des Bussockels und die dazu komplementäre, buchsenförmige Positionierungseinrichtung im Busteilnehmer 10 lediglich ein bevorzugtes Ausführungsbeispiel darstellen.

Fig. 4 zeigt anhand des Bussockels 130 eine mögliche Realisierung der Bussockel. In dem Bussockel 130 ist der Teilübertrager angeordnet, der einen E-förmigen ferromagnetischen Kern 195 und im vorliegenden Beispiel eine Empfangsspule 190 umfasst. Der mittlere Schenkel des E-förmigen Kernelements ist als Vorsprung 140 ausgebildet und ragt in eine entsprechende Aussparung des Busteilnehmers 10 hinein. Die Länge des Vorsprungs 140 und die Tiefe der entsprechenden Aussparung im Busteilnehmer 10 sind derart dimensioniert, dass zwischen dem Bussockel 130 und dem Busteilnehmer 10 ein Luftspalt vorhanden ist. Um den als Positionierungseinrichtung fungierenden mittleren Schenkel 140 des E-förmigen Kerns 195 ist die Empfangsspule 190 gewickelt. Für den Fall, dass ein Busteilnehmer keine eigene Energieversorgungsquelle enthält, fungiert die Spule 190 als Sendespule, die die Versorgungsenergie von einer nicht dargestellten externen Energieversorgungseinrichtung oder von einem benachbarten Bussockel zugeführt bekommt. Im unteren Abschnitt des Busteilnehmer 10 ist ein C-förmiger, ferromagnetischer Kern 265 angeordnet, dessen beide Schenkel mit den beiden außen liegenden Schenkeln des E-förmigen Kerns 195 des Bussockels 130 fluchten. In dem C-förmigen Kern 265 ist eine Sendespule 260 eingelassen, welche die Empfangsspule 190 des Bussockels 130 konzentrisch umgibt. Für den Fall, dass ein Busteilnehmer keine eigene Energieversorgungsquelle enthält, fungiert die Spule 260 als Empfangsspule. Der E-förmige, ferromagnetische Kern 195 und die Empfangsspule 190 bilden die elektromagnetische Verbindungseinrichtung und die Positionierungseinrichtung des Bussockels 130, während der C-förmige Kern 265 und die Sendespule 260 die elektromagnetische Gegenverbindungseinrichtung und komplementäre Positionierungseinrichtung des Busteilnehmers 10 bilden. Beide Verbindungseinrichtungen zusammen bilden eine elektromagnetische Steckverbindung. Über diese elektromagnetische Steckverbindung wird die von der Energieversorgungsquelle 250 bereitgestellte Energie kontaktlos zum Bussockel 130 übertragen. Wie allgemein bekannt ist, bilden der E-förmige ferromagnetisch Kern 195 und der C-förmige Kern 265 des Busteilnehmers, welche im vorliegenden Beispiel durch einen Luftspalt getrennt sind, einen magnetischen Kreis, über den der durch die Sendespule 260 erzeugte magnetische Fluss geführt wird, der wiederum in der Empfangsspule 190 eine entsprechende Spannung induziert. Die Empfangsspule 190 des Bussockels 130 kann elektrisch über eine Anschlussleitung 200 mit einem Kontaktstift 220 und/oder über eine Anschlussleitung 210 mit einer Kontaktbuchse 230 verbunden sein. Über den Kontaktstift 220 und die Kontaktbuchse 230 kann der Bussockel 130 elektrisch mit benachbarten Bussockeln verbunden werden, um die Busteilnehmer mit Energie versorgen zu können. Hierzu können auch die übrigen Bussockel 131 und 132 Kontaktstifte und/oder - buchsen aufweisen. Weist der Bussockel 131 lediglich einen Kontaktstift auf, der in die Kontaktbuchse 230 des Bussockels 130 eingreift, speist die Energieversorgungsquelle 250 des Busteilnehmers 10 lediglich den benachbarten Busteilnehmer 20 über die Bussockel 130 und 131 mit Energie. Die übrigen, in Fig. 1 gezeigten Busteilnehmer 20 können in ähnlicher Weise über die im Busteilnehmer 30 implementierte Energieversorgungsquelle mit Energie gespeist werden.

Da jeder Busteilnehmer des modularen Datenübertragungssystems 5 mit einem eigenen Bussockel verbunden ist, wird jeder Busteilnehmer unabhängig von den anderen Busteilnehmern mit Energie versorgt. Für den Fall, dass ein Busteilnehmer ausfällt oder ausgetauscht wird, werden die übrigen Busteilnehmer nach wie vor mit Energie versorgt und können je nach Implementierung des modularen Datenübertragungssystems 5 in einen sicheren Zustand, beispielsweise Notaus, gefahren werden.

Angemerkt sei, dass gemäß der besonderen Ausführungsform des Bussockels der E-förmige Kern nicht nur Teil der elektromagnetischen Verbindungseinrichtung ist, sondern auch die Positionierungseinrichtung des Bussockels 130 bildet. Denkbar ist natürlich auch, dass anstelle des mittleren Schenkels 140 des E-förmigen Kerns 195 ein oder beide Außenschenkel des Kerns 195 als Vorsprünge ausgebildet werden, die dann die Positionierungseinrichtung bilden. In diesem Fall sind entsprechende Aussparungen im Busteilnehmer 10 vorzusehen. Alternativ oder zusätzlich können separate Positionierungseinrichtungen, beispielsweise in Stiftform, an der oberen Stirnseite des Bussockels 130 vorgesehen sein, die in komplementäre Aussparungen im Busteilnehmer 10 eingreifen.

Anstatt eine kontaktlose, elektromagnetische Steckverbindung bereitzustellen, können im Busteilnehmer 10 und im Bussockel 130 entsprechende Kontaktelemente vorgesehen sein, die eine galvanische Steckverbindung bilden, sobald der Busteilnehmer auf dem Bussockel aufgesetzt ist.

## Patentansprüche

1. Modulares Datenübertragungssystem, umfassend
- eine Tragschiene (2),
- zwei oder mehrere Busteilnehmer (10, 20, 30), die aneinander reihbar an der Tragschiene (2) lösbar befestigt sind und zwischen benachbarten Busteilnehmern mit Kopplungsmitteln in Gestalt von drahtlos miteinander in Verbindung stehenden Sende- und Empfangs-Einrichtungen (40, 50, 60) ausgestattet sind, um Daten zwischen aneinander angereihten Busteilnehmern kontaktlos zu übertragen, und
- eine Energieversorgungsquelle (250) für die Busteilnehmer (10, 20, 30), **dadurch gekennzeichnet, dass**
jeder Busteilnehmer (10, 20, 30) mit einem zugehörigen Bussockel (130, 131, 132) lösbar verbunden ist, der jeweils eine Positioniereinrichtung (140, 141, 142) zum Positionieren der jeweiligen Busteilnehmer (10, 20, 30) zueinander aufweist,
dass eine elektromagnetische Steckverbindung (140, 190, 195; 260, 265) zwischen Busteilnehmer und zugehörigem Bussockel für wenigstens zwei Teilnehmer vorgesehen ist, um mittels gebildeter Teilübertrager (190, 195; 260, 265) die von der Energieversorgungsquelle (250) bereitgestellte Energie kontaktlos vom und zum Busteilnehmer bzw. von und zum zugehörigen Bussockel zu übertragen, und
dass wenigstens einige der benachbarten Bussockel (130, 131) zur Übertragung von Versorgungsenergie miteinander gekoppelt sind.

2. Modulares Datenübertragungssystem nach Anspruch 1, wobei die elektromagnetische Steckverbindung (140, 190, 195; 260, 265) gleichzeitig eine Positioniereinrichtung für den zugehörigen Busteilnehmer (10, 20, 30) bildet.

3. Modulares Datenübertragungssystem nach Anspruch 1 oder 2, wobei einige der Bussockel (130) mit Kontakten (220, 230) versehene Anschlussleitungen (200, 210) aufweisen und nebeneinander angeordnete Bussockel über diese Kontakte (220, 230) miteinander verbunden sind, um mit den Anschlussleitungen (200, 210) als separate Stromschiene zu fungieren.

4. Modulares Datenübertragungssystem nach einem der Ansprüche 1 - 3, wobei der Teilübertrager (190, 195) eines jeweiligen Bussockels (130, 131, 192) einen E-förmigen ferromagnetischen Kern (195) mit einem verlängerten Schenkel aufweist, und der Teilübertrager (260, 265) des zugehörigen Busteilnehmers (10, 20, 30) einen C-förmigen ferromagnetischen Kern (265) enthält, wobei ferner der verlängerte Schenkel mit einer Spule (190) umgeben ist, und der C-förmige Kern (265) eine Ringspule (260) aufweist, und wobei die Spule (190) und die Ringspule (260) als komplementäre Positionierungseinrichtung zusammen wirken.

5. Modulares Datenübertragungssystem nach einem der Ansprüche 1 - 4, wobei die Bussockel (130, 131, 132) lösbar an der Tragschiene (2) befestigt sind.

6. Modulares Datenübertragungssystem nach einem der Ansprüche 1 - 5, wobei die Kopplungsmittel induktiver Art sind und jeder Busteilnehmer (10, 20, 30) eine Daten-Sendespule (70, 82, 90, 102), eine Daten-Empfangsspule (72, 80, 92, 100) und Taktspulen (75; 85; 95; 105) aufweist.

7. Modulares Datenübertragungssystem nach einem der Ansprüche 1 - 5, wobei die Koppelmittel kapazitiver Art sind und jeder Busteilnehmer (10, 20, 30) Daten-Sende-Kondensatorplatten (150, 151; 162, 163; 170, 171; 182, 183), Daten-Empfangs-Kondensatorplatten (152, 153; 160, 161; 172, 173; 180, 181) sowie Taktsignal-Kondensatorplatten (154, 155; 164, 165; 174, 175; 184, 185) aufweist.

8. Modulares Datenübertragungssystem nach einem der Ansprüche 1 - 7, wobei die Sende- und Empfangseinrichtungen (40, 50, 60) zur Übertragung von Differenzsignalen ausgebildet sind.

9. Modulares Datenübertragungssystem nach einem der Ansprüche 1 - 8, wobei wenigstens ein Bussockel (130, 131, 132) an einer externen Energieversorgungsquelle (250) angeschlossen ist.

10. Modulares Datenübertragungssystem nach einem der Ansprüche 1 - 9, wobei wenigstens ein Busteilnehmer (10, 20, 30) eine Energieversorgungsquelle (250) beherbergt.

## Claims

1. A modular data transfer system, comprising:
- a support rail (2);
- two or more bus subscribers (10, 20, 30) arrangeable adjacent to each other on the support rail (2) and removably mounted thereto, and having coupling means provided between adjacent bus subscribers in form of wirelessly intercommunicating transmitter and receiver devices (40, 50, 60) for contact-free transfer of data between adjacently arranged bus subscribers; and
- an energy supply source (250) for the bus subscribers (10, 20, 30); **characterized in**
**that** each bus subscriber (10, 20, 30) is releasably connected to an associated bus base (130, 131, 132) each of which includes a positioning means (140, 141, 142) for positioning the respective bus subscribers (10, 20, 30) relative to each other;
**that** for at least two subscribers an electromagnetic plug connection (140, 190, 195; 260, 265) is provided between bus subscriber and associated bus base for contact-free transfer of the energy supplied by the energy supply source (250) to and from the bus subscriber and to and from the associated bus base, respectively, by means of partial transformers (190, 195; 260, 265) formed; and
**that** at least some of the adjacent bus bases (130, 131) are coupled together for transfer of supplied energy.

2. The modular data transfer system according to claim 1, wherein the electromagnetic plug connection (140, 190, 195; 260, 265) at the same time forms a positioning means for the associated bus subscriber (10, 20, 30).

3. The modular data transfer system according to claim 1 or 2, wherein some of the bus bases (130) have connecting lines (200, 210) provided with terminal contacts (220, 230) and wherein adjacently arranged bus bases are connected to each other through said terminal contacts (220, 230) so as to function as a separate current rail together with the connecting lines (200, 210).

4. The modular data transfer system according to any of claims 1 to 3, wherein the partial transformer (190, 195) of a respective bus base (130, 131, 192) has an E-shaped ferromagnetic core (195) with an elongated leg and the partial transformer (260, 265) of the associated bus subscriber (10, 20, 30) has a C-shaped ferromagnetic core (265), wherein, furthermore, the elongated leg is surrounded by a coil (190) and the C-shaped core (265) has an annular coil (260), and wherein the coil (190) and the annular coil (260) cooperate to form a complementary positioning means.

5. The modular data transfer system according to any of claims 1 to 4, wherein the bus bases (130, 131, 132) are releasably secured to the support rail (2).

6. The modular data transfer system according to any of claims 1 to 5, wherein the coupling means are of inductive nature and each bus subscriber (10, 20, 30) has a data transmitting coil (70, 82, 90, 102), a data receiving coil (72, 80, 92, 100), and clock coils (75; 85; 95; 105).

7. The modular data transfer system according to any of claims 1 to 5, wherein the coupling means are of capacitive nature and each bus subscriber (10, 20, 30) has data transmitting capacitor plates (150, 151; 162, 163; 170, 171; 182, 183), data receiving capacitor plates (152, 153; 160, 161; 172, 173; 180, 181), and clock signal capacitor plates (154, 155; 164, 165; 174, 175; 184, 185).

8. The modular data transfer system according to any of claims 1 to 7, wherein the transmitter and receiver means (40, 50, 60) are adapted for transferring differential signals.

9. The modular data transfer system according to any of claims 1 to 8, wherein at least one bus base (130, 131, 132) is connected to an external energy supply source (250).

10. The modular data transfer system according to any of claims 1 to 9, wherein at least one bus subscriber (10, 20, 30) accommodates an energy supply source (250).

## Revendications

1. Système modulaire de transmission de données, comprenant
- une barre support (2),
- deux ou plusieurs participants de bus (10, 20, 30) fixés de manière amovible et pouvant être montés en série sur la barre support (2), et pourvus entre participants de bus contigus de moyens de couplage sous la forme de dispositifs d'émission et de réception (40, 50, 60) à liaison sans fil les uns avec les autres pour transmettre sans contact des données entre participants de bus montés en série, et
- une source d'alimentation en énergie (250) pour les participants de bus (10, 20, 30), **caractérisé en ce que**
chaque participant de bus (10, 20, 30) est relié de manière amovible à un socle de bus (130, 131, 132) associé comportant un dispositif de positionnement (140, 141, 142) respectif pour le positionnement les uns par rapport aux autres des participants de bus (10, 20, 30) correspondants,
**en ce qu'**une connexion électromagnétique à fiche (140, 190, 195 ; 260, 265) est prévue entre participants de bus et socle de bus associé pour au moins deux participants de bus, pour transmettre sans contact l'énergie fournie par la source d'alimentation en énergie (250) du participant de bus et vers celui-ci ou du socle de bus associé et vers celui-ci au moyen de transformateurs partiels (190, 195 ; 260, 265) formés, et **en ce qu'**au moins quelques-uns des socles de bus (130, 131) contigus sont couplés entre eux pour la transmission de l'énergie d'alimentation.

2. Système modulaire de transmission de données selon la revendication 1, où la connexion électromagnétique à fiche (140, 190, 195 ; 260, 265) constitue simultanément un dispositif de positionnement pour le participant de bus (10, 20, 30) correspondant.

3. Système modulaire de transmission de données selon la revendication 1 ou 2, où quelques-uns des socles de bus (130) sont dotés de lignes de connexion (200, 210) pourvues de contacts (220, 230), et où des socles de bus disposés côte à côte sont reliés entre eux au moyen desdits contacts (220, 230) pour servir de barre conductrice séparée avec les lignes de connexion (200, 210).

4. Système modulaire de transmission de données selon l'une des revendications 1 à 3, où le transformateur partiel (190, 195) de chaque socle de bus (130, 131, 132) comporte un noyau (195) ferromagnétique en forme de E avec une branche prolongée, et en ce que le transformateur partiel (260, 265) du participant de bus (10, 20, 30) correspondant contient un noyau (265) ferromagnétique en forme de C, la branche prolongée étant en outre entourée d'une bobine (190), le noyau (265) en forme de C comportant une bobine annulaire (260), et la bobine (190) et la bobine annulaire (260) coopérant en tant que dispositif de positionnement complémentaire.

5. Système modulaire de transmission de données selon l'une des revendications 1 à 4, où les socles de bus (130, 131, 132) sont fixés de manière amovible à la barre support (2).

6. Système modulaire de transmission de données selon l'une des revendications 1 à 5, où les moyens de couplage sont de type inductif et où chaque participant de bus (10, 20, 30) comporte une bobine émettrice de données (70, 82, 90, 102), une bobine réceptrice de données (72, 80, 92, 100) et des bobines de synchronisation (75 ; 85 ; 95 ; 105).

7. Système modulaire de transmission de données selon l'une des revendications 1 à 5, où les moyens de couplage sont de type capacitif et où chaque participant de bus (10, 20, 30) comporte des plaques de condensateur émettrices de données (150, 151 ; 162, 163 ; 170, 171 ; 182, 183), des plaques de condensateur réceptrices de données (152, 153 ; 160, 161 ; 172, 173 ; 180, 181) et des plaques de condensateur à signal de synchronisation (154, 155 ; 164, 165 ; 174, 175 ; 184, 185).

8. Système modulaire de transmission de données selon l'une des revendications 1 à 7, où les dispositifs d'émission et de réception (40, 50, 60) sont prévus pour la transmission de signaux différentiels.

9. Système modulaire de transmission de données selon l'une des revendications 1 à 8, où au moins un socle de bus (130, 131, 132) est relié à une source externe d'alimentation en énergie (250).

10. Système modulaire de transmission de données selon l'une des revendications 1 à 9, où au moins un participant de bus (10, 20, 30) contient une source d'alimentation en énergie (250).
